# EUROPEAN PATENT APPLICATION

(11) **EP 2 339 452 A2**
(43) Date of publication of application: **29.06.2011**
(21) Application number: 10187733.0
(22) Date of filing: 15.10.2010
(51) Int. Cl.: G06F 3/14, A63F 3/00, A63F 13/00, G06F 19/00

(54) **Display apparatus, terminal, and image display method**

(30) Priority: 13.11.2009 KR 20090109937
(71) Applicant: SAMSUNG ELECTRONICS CO., LTD., Suwon-si, Gyeonggi-do (KR)
(72) Inventor: Chung, Ho-suk, Seoul (KR); Joo, Jae-il, Gyeonggi-do (KR); Cho, Kang-myeong, Seoul (KR); Kashyap, Praveen, Irvine, CA 92606 (US); Gicklhorn, Daniel, Irvine, CA 92620 (US)
(74) Representative: Hewett, Jonathan Michael Richard

(57) **Abstract**

A display apparatus includes a display unit; a communication unit which communicates with a terminal which displays a personal image provided to the terminal, the terminal being one of a plurality of terminals; and a controller controls the display unit to display a sharing image shared among users of the plurality of terminals on the display unit and changes the sharing image displayed on the display unit in accordance with an input received from the terminal. Accordingly, there is provided a display apparatus which provides a vide interface including a sharing image and a personal image, a terminal and an image display method.

## Description

The present invention relates to a display apparatus, a terminal and an image display method, and more particularly, to a display apparatus capable of transmitting and receiving contents, a terminal and an image display method.

With recent development of digital devices, various electronic devices can communicate with one another and thus transmit and receive various contents through the communication.

Also, such a development has brought digital convergence, and is thus being applied to various fields without any limit to a communication type, a communication method and contents among the electronic devices.

Further, as the communication between consumer electronics (CE) becomes active, a user's demand is on the rise with regard to more various display environments.

According to an aspect of the present invention, there is provided a display apparatus, a terminal and an image display method capable of providing a video interface containing a sharing image and a personal image.

According to another aspect of the present invention, there is provided a display apparatus, a terminal, an image display system including the same capability of displaying contents arousing a user's interest, and an image display method.

The foregoing and/or other aspects may be achieved by providing a display apparatus comprising a display unit; a communication unit which communicates with a terminal which displays a personal image provided to the terminal, the terminal being one of a plurality of terminals; and a controller which controls the display unit to display a sharing image shared among users of the plurality of terminals on the display unit and changes the sharing image displayed on the display unit in accordance with an input received from the terminal.

The controller may receive software containing information about the sharing image and the personal image from an external server.

The controller may transmit personal contents containing information about the personal image to the terminal if the controller is connected to the terminal through the communication unit via a network.

The controller may transmit information about the changed sharing image to the at least one terminal.

The controller may receive an input signal corresponding to a user input from the terminal, and transmits one of changed personal contents for the terminal and data for changing the personal image for the terminal, to the terminal.

The personal contents may comprise a script.

The server software may comprise game software.

Another aspect of the present invention may be achieved by providing an image display method of a display apparatus comprising a display unit and a communication unit which communicates with a terminal of a plurality of terminals, the method comprising: receiving server software for displaying personal images provided to the plurality of terminals and a sharing image shared among users at the display unit from an external server; displaying the sharing image on the display unit; transmitting personal contents containing information about one of the plurality of personal images to the terminal; and changing the sharing image in accordance with a user input received from the terminal.

Still another aspect of the present invention may be achieved by providing a terminal capable of communicating with a display apparatus that displays a sharing image shared among users, the terminal comprising: a display unit; a communication unit which communicates with the display apparatus; and a controller which receives personal contents containing information about a personal image provided to the terminal from the display apparatus, and processes the personal contents to display as the personal image on the display unit.

Yet another aspect of the present invention may be achieved by providing an image display method of a terminal capable of communicating with a display apparatus that displays a sharing image shared among users, the method comprising receiving personal contents containing information about a personal image provided to the terminal from the display apparatus; processing the personal contents and displaying the personal image on a display unit of the terminal; and transmitting information about a change in the personal image corresponding to a received user input to the display apparatus.

The above and/or other aspects of the present invention will become apparent and more readily appreciated from the following description of the exemplary embodiments, taken in conjunction with the accompanying drawings, in which:
FIG. 1 shows an image display system according to an exemplary embodiment;
FIG. 2 is a control block diagram of the image display system in FIG. 1;
FIG. 3 is a control flowchart for explaining a process of connecting a display apparatus and a terminal of the image display system in FIG. 1;
FIG. 4 is a control flowchart for explaining an image display method in the image display system of FIG. 1; and
FIG. 5 is a control flowchart for explaining another image display method in the image display system of FIG. 1.

Below, exemplary embodiments will be described in detail with reference to accompanying drawings so as to be easily realized by a person having ordinary knowledge in the art. The exemplary embodiments may be embodied in various forms without being limited to the embodiments set forth herein. Descriptions of well-known parts are omitted for clarity, and like reference numerals refer to like elements throughout. Expressions such as "at least one of" when preceding a list of elements, modify the entire list of elements and do not modify the individual elements of the list.

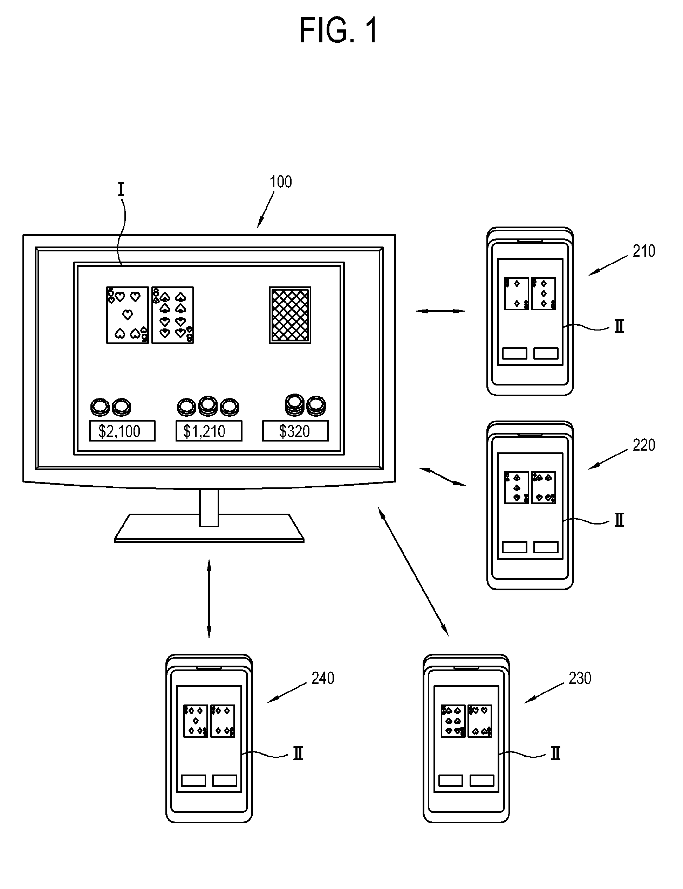

FIG. 1 is a view showing an image display system according to an exemplary embodiment. As shown therein, an image display system comprises a display apparatus 100, and a plurality of terminals 210, 220, 230 and 240 communicating with the display apparatus 100. The display apparatus 100 and each of the terminals 210, 220, 230 and 240 communicate with each other and transmit and receive contents, data and various signals. The image display system receives server software for displaying a sharing image I and a personal image II from an external server (not shown), and individually displays the sharing image I and the personal image II on the display apparatus 100 and the terminals 210, 220, 230 and 240. The display apparatus 100 is an apparatus for receiving and executing the server software, which corresponds to a server that provides personal contents to the terminal 210, 220, 230 and 240.

In this exemplary embodiment, the display apparatus 100 that receives the server software includes a television for receiving a broadcasting signal, but not limited thereto. Alternatively, the display apparatus 100 may include a monitor connected to a computer system, a large-sized display apparatus such as a large format display (LFD), or a table top display that can be installed in a public place. The table top display is a display apparatus like a screen installed on a table of various types, which provides an interface allowing at least one user to perform multi-touch using a tool such as a hand or a pointer while viewing an image processed by an image processing apparatus such as a computer. The table top display supports multi-user and the multi-touch, and is thus used in cooperative work. The multi-touch provides the user with the ability to apply multiple finger gestures simultaneously onto the electronic visual display to send commands to the device and can be achieved by a capacitive type detection using variance of electric capacitance or a visual type detection using an optical device such as a camera or a thermal sensor or the like.

The terminals 210, 220, 230, 240 according to this exemplary embodiment may include a mobile phone, a personal digital assistant (PDA), a portable multimedia player (PMP), a remote controller, etc. For convenience, a portable personal terminal may be used as the terminal, but not limited thereto. Also, the number of terminals is not limited. For example, one terminal and the display apparatus 100 can communicate with each other.

The server software is a content package containing information about the sharing image I that has to be visible to all users using the terminals 210, 220, 230 and 240, and information about the personal images II individually displayed on the respective terminals 210, 220, 230 and 240, respectively. Each personal image II may be unique to only one of the terminals to be displayed thereon. The server software is executed in the display apparatus 100. One of the sharing image I and each personal image II is varied depending on the other one, and the sharing image I and the personal images II are collectively controlled by the display apparatus 100. The server software may include execution files of various multimedia such as a still image, a moving picture, and an audio.

As shown therein, the image display system displays a game image by way of example. For example, if a poker game is displayed, the sharing image I displayed on the display apparatus 100 may include an image containing community cards, each player's chips or the like that all users have to see, but the personal image II may include an image containing a user's own cards to be concealed from other users. That is, the image display system in this exemplary embodiment displays the sharing image I and each personal image II on separate display apparatuses, thereby providing users with a new display environment different from the ones provided in the related art. If the server software executed as described above is game software, users can enjoy a game through respective terminals while viewing one sharing image I. Thus, as opposed to a network game provided in the related art in which users individually play the game through a network, in this exemplary embodiment, users can interactively enjoy a game in one space.

If the server software is educational software or conference software, the sharing image I may include educational material or conference data to be shared and the personal image II may be used as a notebook for each user. If the sharing image I is an examination image to be shared, the personal image II may include an answer sheet for each user. Alternatively, the server software may include a program to transact an auction or trade stocks.

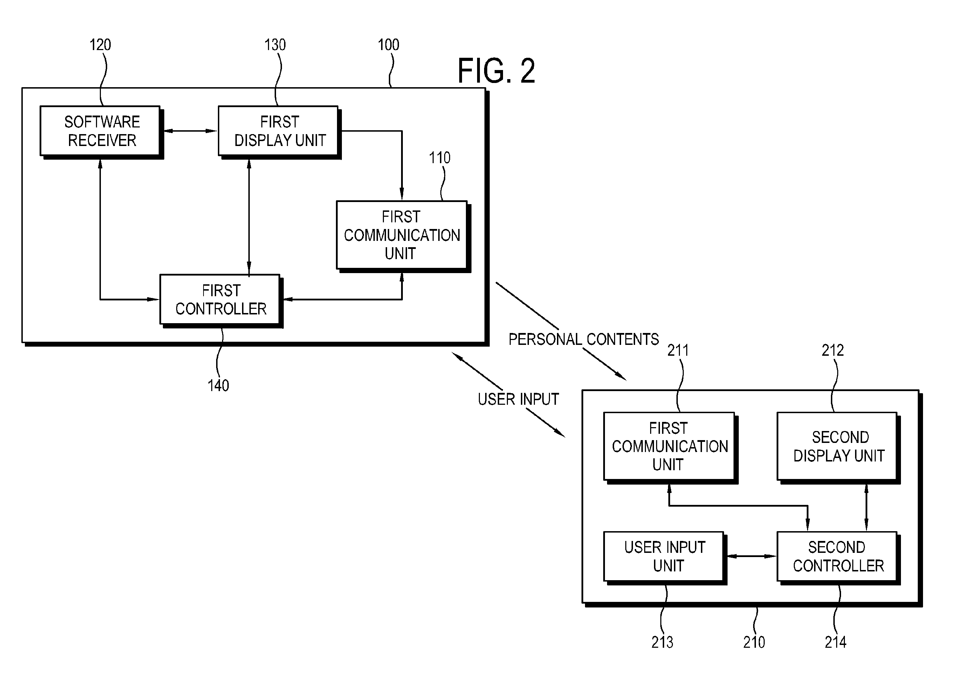

FIG. 2 is a control block diagram of the image display system in FIG. 1. As shown therein, the display apparatus 100 includes a first communication unit 110, a software (SW) receiver 120, a first display unit 130, and a first controller 140 that controls the communication unit 110, the SW receiver 120 and the first display unit 130 and executes the server software. As a representative of the terminals shown in FIG. 1, the first terminal 210 includes a second communication unit 211, a second display unit 212, a user input unit 213 and a second controller 214. The first controller 140 and the second controller 214 include hardware, including but not limited to at least one processor and a computer-readable storage medium.

The first communication unit 110 and the second communication unit 211 may include a communication module corresponding to various communication methods such as Bluetooth, WiFi, ZigBee, infrared (IR) communication, radio frequency (RF) communication, and other wired communications. According to this exemplary embodiment, the display apparatus 100 and the terminals 210, 220, 230 and 240 may communicate with each other through digital living network alliance (DLNA) established on the basis of previously built-up open standards, e.g., hypertext transfer protocol (HTTP), Universal Plug and Play (UPnP), WiFi, etc. The DLNA is focused on sharing all contents provided from a television (TV), a video cassette recorder (VCR), a digital camera, an audio system, etc., and which aids in acquiring, transferring and managing digital media contents (e.g., photographs, music, video, etc.) from a private device such as a mobile device, a personal computer, etc. The first communication unit 110 and the second communication unit 211 may transmit and receive an image, a user's input, contents, various control signals, etc. through a network based on the DLNA.

The first controller 140 of the display apparatus 100 searches the terminal through the first communication unit 110, sets up and releases a target terminal, and transmits personal contents and various signals to the terminals. Also, the terminal 210 transmits an access request signal, an access release signal, and a user manipulation signal to the display apparatus 100 through the second communication unit 211.

The SW receiver 120 receives the server software from an external server (not shown) for displaying the sharing image I and the personal image II. The server software is compiled application software to be executed as an execution image in the display apparatus 100. If the server software is executed, the sharing image I is displayed on the display apparatus 100, and the personal contents containing the personal images II to be displayed on the terminals 210, 220, 230 and 240 are provided to the terminals 210, 220, 230 and 240. The personal contents may be the application software, or may be a script to be processed by a browser of the terminals 210, 220, 230 and 240. For example, the personal contents include the script to be processed regardless of a platform supported by the terminals 210, 220, 230 and 240.

The SW receiver 120 may include a broadcast receiver to receive a broadcasting signal. Also, the SW receiver 120 may use a network such as Internet, Ethernet or a public switched telephone network (PSTN), or may use a one-to-one network. Further, the SW receiver 120 may receive the server software stored in an internal storage (not shown). The external server may include a broadcasting station and a network server. The external server stores the server software, and transmits the server software to the display apparatus 100 in response to a request signal for the server software.

The first display unit 130 and the second display unit 212 display images respectively processed by the controllers 140 and 214. Each of the first display unit 130 and the second display unit 212 may include a liquid crystal display (LCD) panel having a liquid crystal and an organic light emitting diode (OLED) panel having an OLED, and a panel driver for driving the panel.

The first controller 140 executes the received server software to display the sharing image I on the first display unit 130, and transmits the personal contents containing information about the personal images II to the terminals 210, 220, 230 and 240. The server software includes meta-data about the personal contents, and the first controller 140 transmits the personal contents individually to the respective terminals 210, 220, 230 and 240 on the basis of the meta-data. Here, the meta-data refers to data given to the contents according to certain rules in order to efficiently search and use desired information among massive information. In this exemplary embodiment, the meta-data includes location information and contents information of the personal contents, and information about an author, a right condition, a use condition, a use history, etc. Further, the first controller 140 changes the sharing image I and the personal image II in response to a user's input (e.g., an input to one of the terminals 210, 220, 230, 240) or according to the execution of the server software. In general, since the server software is transferred as being compressed, the first controller 140 may include an application for decompressing the server software, a decoding module and a scaler for displaying the sharing image I on the first display unit 130, and an audio processing module for processing an audio signal if the sharing contents include an audio signal.

The second controller 214 processes the personal contents transferred from the display apparatus 100 and displays the personal image II on the second display unit 212. Like the first controller 140, the second controller 214 may include similar modules for processing a video and an audio.

The user input unit 213 of the terminal 210 is an interface configured to allow a user to input a user manipulation signal for adjusting, manipulating or controlling the personal image II. The user input unit 213 may include various buttons, a remote controller having various buttons, a touch panel allowing a user to input his/her selection using a pointing device, etc.

The sharing image I and the personal image II are displayed on the different display units, i.e., on the first display unit 130 and the second display unit 212, respectively, but the two images I and II are displayed as being interlocked or interconnected with each other. In other words, one of the two images I and II is changed in accordance with a change of the other image, or induces the other image to change. The first controller 140 controls the second controller 214 to change the personal image II according to a change in the sharing image I as they are interlocked with each other, and to display the changed contents. The personal image II displayed on the second display unit 212 of each terminal 210, 220, 230, 240 is an image specialized according to the terminals 210, 220, 230 and 240, which can be changed by not only a change in the sharing image I but also a change in the personal image II displayed on another terminal 210, 220, 230, 240.

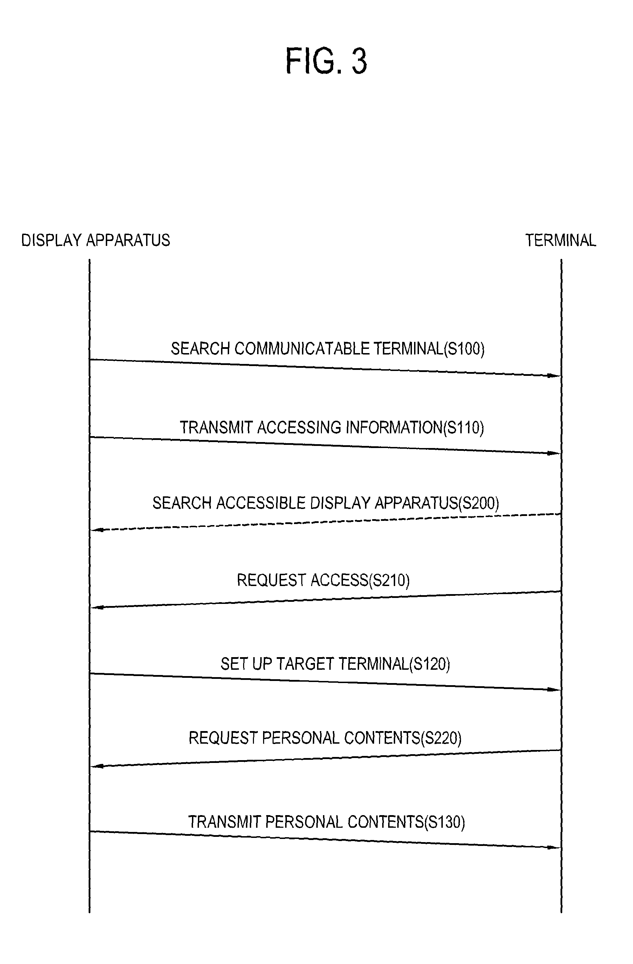

FIG. 3 is a control flowchart for explaining a process of connecting a display apparatus and a terminal of the image display system in FIG. 1. First, connection for communication between the display apparatus 100 and the terminals 210, 220, 230 and 240 will be described with reference to FIG. 3.

The display apparatus 100 searches for a communicable terminal at operation S100, and transmits accessing information for notifying an accessible state to the searched terminal at operation S110. In the image display system, since the display apparatus 100 is employed as a server with regard to the terminals 210, 220, 230 and 240, the display apparatus 100 needs to collect information about currently accessible terminals, accessed terminals by the display apparatus, terminals trying to access the display apparatus 100, or the like. In other words, the display apparatus 100 searches for the terminals so as to correctly and easily manage an accessing state of the terminals.

On the other hand, the terminals 210, 220, 230 and 240 may search for an accessible display apparatus 100 through the second communication unit 211 at operation S200. The terminals 210, 220, 230 and 240 may search not only for the display apparatus 100 but also for other terminals which currently have access to the display apparatus 100.

The terminals 210, 220, 230 and 240 recognize accessibility to the display apparatus 100 by either receiving the accessing information from the display apparatus 100 or searching in itself for request access information for accessing the display apparatus 100 at operation S210.

At operation S120, the display apparatus 100 sets up the terminals 210, 220, 230 and 240, which request the access among the communicable terminals, as target terminals to which personal contents can be transmitted.

At operation S220, the terminals 210, 220, 230 and 240 request the display apparatus 100 to transmit the personal contents. In response to the request, the display apparatus 100 transmits the personal contents to the terminals 210, 220, 230 and 240 at operation S130. Here, an access request signal transmitted from the terminals 210, 220, 230 and 240 to the display apparatus 100 may include a signal for requesting the personal contents. That is, the display apparatus 100 may regard the access request signal as a content requesting signal when receiving the access request signal, and transmit the personal contents to the terminals from which the access request signal is transmitted.

Although it is not shown, if the target terminal transmits an access release signal for releasing the access, the display apparatus 100 releases the access with the target terminal that transmits the access release signal.

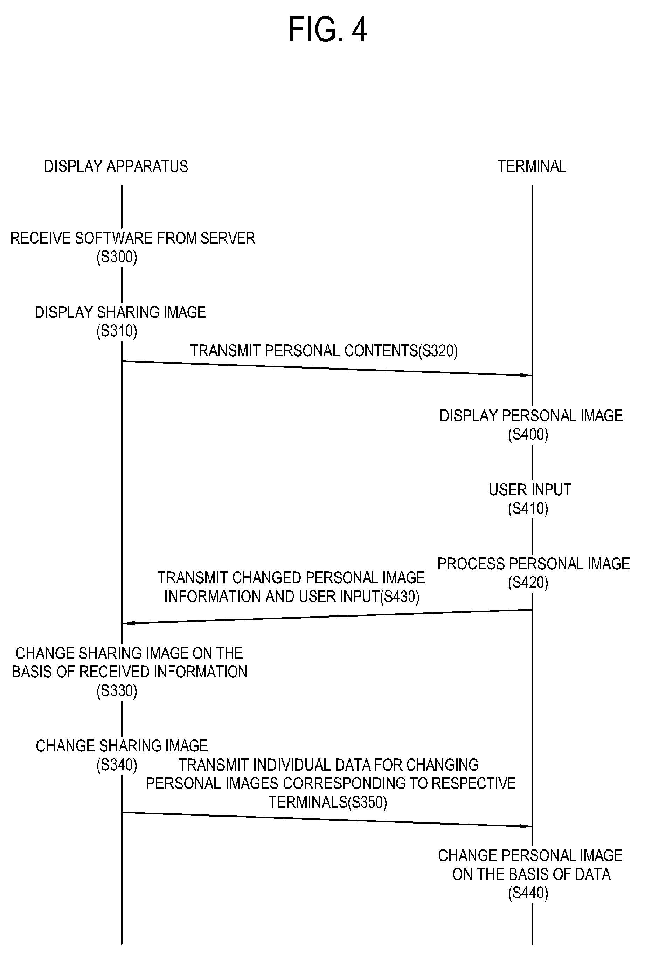

FIG. 4 is a control flowchart for explaining an image display method in the image display system of FIG. 1. Below, a process that the sharing image I and the personal image II are changed by the first controller 140 as being interlocked with each other will be described with reference to FIG. 4.

First, the display apparatus 100 receives the server software from the external server at operation S300, in which the server software contains information about the sharing image I to be displayed on the first display unit 130 and the personal images II to be displayed on the terminals 210, 220, 230 and 240.

The operation that the display apparatus 100 receives the server software is performed before transmitting the personal contents to the terminals 210, 220, 230 and 240.

The display apparatus 100 processes the received server software by the first controller 140, and then displays the sharing image I on the first display unit 130 at operation S310 and transmits the personal contents to the terminals 210, 220, 230 and 240 that have requested the personal contents at operation S320.

The terminals 210, 220, 230 and 240 process each of their personal contents received through the second communication unit 211 by the second controller 214, and display the corresponding personal image II on the second display unit 212 at operation S400. The personal contents may include a script. In this case, the terminals 210, 220, 230 and 240 may download software, e.g., a browser capable of processing the script, from the external server. Since the personal contents are processed by the browser regardless of a platform, the terminals 210, 220, 230 and 240 need not download a separate application for processing the personal contents. In other words, the terminals 210, 220, 230 and 240 can execute the personal contents provided from the display apparatus 100 without downloading separate applications for executing various kinds of personal contents.

At operation S410, a user may make an input at one of the terminals, for example, for manipulating the personal image II displayed thereon through the user input unit 213. At operation S420, the second controller 214 processes the personal image II in response to the user's input. For example, in the case of a poker game, a user may perform manipulation such as opening one of his/her cards, placing a bet, folding a hand or giving up the game, and correspondingly the second controller 214 changes the personal image.

The terminal 210, 220, 230, 240 manipulated by the user transmits information about the changed personal image II, a received user's input, or a control signal based on a user's input to the display apparatus 100 at operation S430.

At operation S330, the display apparatus 100 changes the sharing image I to correspond to the received information, i.e., the changed personal image II and/or a user's input. If a certain user opens a card, begins betting, folds a hand or gives up the game while the terminal is interconnected with the display apparatus 100, the display apparatus 100 correspondingly changes the sharing image I.

At operation S340, the display apparatus 100 may change the sharing image I while executing the server software without responding to the user's input. For example, the execution of the sever software may allow the display apparatus 100 to become like one of the terminals manipulated by the game players and take part in the game. In this case, the sharing image I may be changed without a user's input.

If the sharing image I is changed by any means or if there is information to be provided to each of the terminals 210, 220, 230 and 240, the display apparatus 100 individually transmits information to the respective terminals 210, 220, 230 and 240 in order to change the personal images II corresponding to the terminals 210, 220, 230 and 240, respectively. At operation S350, the display apparatus 100 individually transmits data independent of each other to the respective terminals 210, 220, 230 and 240 so as to individually change the personal images II corresponding to the terminals 210, 220, 230 and 240, respectively. Here, the data may include image-composition information about the personal image II needed to change, and various control and command signals.

At operation S440, the terminals 210, 220, 230 and 240 change the personal images II on the basis of the received data, respectively.

When receiving a user's input from one of the plurality of terminals 210, 220, 230 and 240, the first controller 140 of the display apparatus 100 correspondingly changes at least one of the sharing image I and the personal images II of the other terminals.

As described above, the sharing image I and the personal image II are changed as being interlocked with each other, and the first controller 140 controls the second controller 214 so that the personal images II of the individual terminals 210, 220, 230 and 240 can be changed corresponding to the change in the sharing image I or in the personal images II of other terminals.

When receiving a user's input, the terminals 210, 220, 230 and 240 in this exemplary embodiment process and change their own personal images II by themselves while providing the user's input to the display apparatus 100. According to another exemplary embodiment, the terminals 210, 220, 230 and 240 may provide a user's input to the display apparatus 100 and then receive changed information of the personal image II corresponding to the relevant user's input from the display apparatus 100. In other words, the terminals 210, 220, 230 and 240 transmit the received user's input to the display apparatus 100, and all image processing may be performed in the display apparatus 100. In this case, the terminals 210, 220, 230 and 240 serve to display the personal image II depending on the received information.

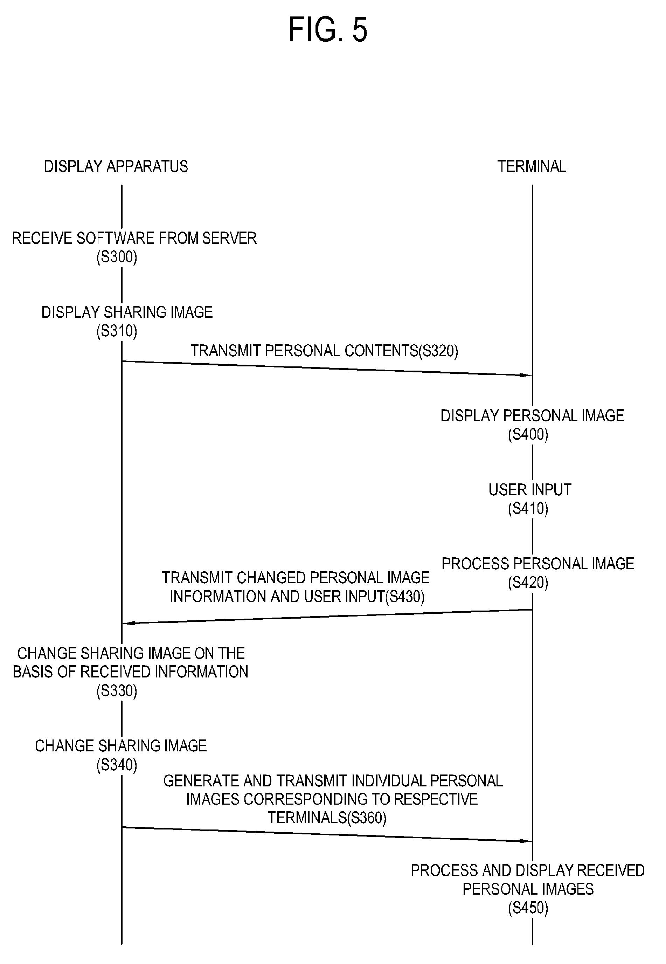

FIG. 5 is a control flowchart for explaining another image display method in the image display system of FIG. 1.

Basic control operations such as connecting the display apparatus 100 and the terminal 210, 220, 230 and 240 to each other through access protocols, starting communication, and changing the sharing image I and the personal images II by the first controller 140 are the same as those of FIG. 3.

In this exemplary embodiment, if the personal images II have to be changed, at operation S360 the display apparatus 100 generates the personal images II and transmits them to the terminals 210, 220, 230 and 240 without transmitting data, control and command signals about the personal images II to be changed. At operation S450, the second controller 214 receives the personal image II generated in the display apparatus 100 and performs only a process for displaying it on the second display unit 212. In this case, it is advantageous for reducing a load of processing the data in the terminal 210, 220, 230 and 240. Also, it is possible to display the personal contents regardless of the platforms supported by the terminals 210, 220, 230 and 240, even though personal contents are not a script but application software.

According to another exemplary embodiment, communication may be enabled between the plural terminals 210, 220, 230 and 240. In other words, the terminals 210, 220, 230 and 240 may transmit and receive a text or an image amongst themselves. For example, in the case of playing a game or making a note, it is possible to exchange a message with other terminals or show a personal image II to other terminals. Communication among the terminals 210, 220, 230 and 240 may be achieved by short message service (SMS) or peer to peer (P2P).

As apparent from the above description, the sharing image and the personal image are controlled as being interlocked with each other while displaying different images on a display apparatus communicating with a terminal or terminals, thereby providing a new video interface different from one of the related art. Such a video interface provides a game environment for promoting friendship among a plurality of users, and an environment for allowing each user to control a personal image involved in the opened sharing image in a public place.

As described above, according to an exemplary embodiment, there are provided a display apparatus capable of providing a video interface containing a sharing image and a personal image, a terminal and an image display method.

Also, according to an exemplary embodiment, there are provided a display apparatus capable of displaying contents arousing a user's interest, a terminal and an image display method.

Further, according to another exemplary embodiment, there are provided a display apparatus capable of easily downloading and executing contents, a terminal and an image display system.

Although a few exemplary embodiments have been shown and described, it will be appreciated by those skilled in the art that changes may be made in these exemplarily embodiments without departing from the principles of the present invention, the scope of which is defined in the appended claims.

## Claims

1. A display apparatus comprising
a display unit;
a communication unit for communicating with a terminal which displays a personal image provided to the terminal, the terminal being one of a plurality of terminals; and
a controller arranged to control the display unit to display an image shared among users of the plurality of terminals on the display unit and to change the shared image displayed on the display unit in accordance with an input received from the terminal.

2. The display apparatus according to claim 1, wherein the controller is arranged to receive software containing information about the shared image and the personal image from an external server.

3. The display apparatus according to claim 2, wherein the controller is arranged to transmit personal contents containing information about the personal image to the terminal if the controller is connected to the terminal through the communication unit via a network.

4. The display apparatus according to any one of claims 1 to 3, wherein the controller is arranged to transmit information about the changed shared image to the terminal.

5. The display apparatus according to claim 1, wherein the controller is arranged to receive an input signal corresponding to a user input from the terminal and to transmit one of changed personal contents for the terminal and data for changing the personal image for the terminal, to the terminal.

6. The display apparatus according to claim 3, wherein the personal contents comprise a script.

7. The display apparatus according to claim 2, wherein the server software comprises game software.

8. An image display method of a display apparatus including a display unit and a communication unit which communicates with one of a plurality of terminals, the method comprising:
receiving server software for displaying a plurality of personal images provided to the plurality of terminals and an image shared among users at the display unit from an external server;
displaying the shared image on the display unit;
transmitting personal contents containing information about one of the plurality of personal images to the terminal; and
changing the shared image in accordance with a user input received from the terminal.

9. The method according to claim 8, further comprising transmitting information about the changed shared image to the terminal.

10. A terminal capable of communicating with a display apparatus that displays an image shared among users, the terminal comprising:
a display unit;
a communication unit for communicating with the display apparatus; and
a controller arranged to receive personal contents containing information about a personal image provided to the terminal from the display apparatus, and to process the personal contents to display as the personal image on the display unit.

11. The terminal according to claim 10, further comprising an input unit configured to receive a user input,
wherein the controller is arranged to process the personal image in accordance with the user input, and to transmit an input signal corresponding to the user input to the display apparatus to initiate a change in the shared image displayed on the display apparatus.

12. The terminal according to claim 10, wherein the controller is arranged to receive information about a change in the personal image from the display apparatus, and to change the personal image displayed on the display unit based on the received information.

13. An image display method of a terminal capable of communicating with a display apparatus that displays an image shared among users, the method comprising:
receiving personal contents containing information about a personal image individually provided to the terminal from the display apparatus;
processing the personal contents and displaying the personal image on a display unit of the terminal; and
transmitting information about a change in the personal image corresponding to a received user input to the display apparatus.

14. The method according to claim 13, further comprising:
receiving information about the change in the personal image from the display apparatus; and
changing the personal image displayed on the display unit based on the received information.
